# EUROPÄISCHE PATENTSCHRIFT

(11) **EP 4 609 564 B1**
(45) Veröffentlichungstag und Bekanntmachung des Hinweises auf die Patenterteilung: **02.12.2026**
(21) Anmeldenummer: 23789929.9
(22) Anmeldetag: 12.10.2023
(51) Int. Cl.: H04L 12/12

(54) **VERFAHREN ZUR DRAHTLOSEN REGISTRIERUNG EINER PUMPE MIT EINER PUMPENSTEUERUNG BEI EINER ZENTRALEN VERWALTUNGSEINHEIT UNTER VERWENDUNG EINER MOBILEN KOMMUNIKATIONSVORRICHTUNG**
METHOD FOR WIRELESSLY REGISTERING A PUMP HAVING A PUMP CONTROL WITH A CENTRAL ADMINISTRATION UNIT USING A MOBILE COMMUNICATION DEVICE
PROCÉDÉ D'ENREGISTREMENT SANS FIL D'UNE POMPE AYANT UNE COMMANDE DE POMPE AVEC UNE UNITÉ D'ADMINISTRATION CENTRALE À L'AIDE D'UN DISPOSITIF DE COMMUNICATION MOBILE

(30) Priorität: 28.10.2022 DE 102022128739
(43) Veröffentlichungstag der Anmeldung: 03.09.2025
(73) Patentinhaber: KSB SE & Co. KGaA, 67227 Frankenthal (DE)
(72) Erfinder: GONTERMANN, Daniel, 67227 Frankenthal (DE); HAUCK, Patrick, 67227 Frankenthal (DE); MEISINGER, Sebastian, 67227 Frankenthal (DE); MÜLLER, Benedikt, 67227 Frankenthal (DE); SCHMITT, Patrick, 67227 Frankenthal (DE); KÖHLER, Christoph, 67227 Frankenthal (DE); SCHAAB, Jochen, 67227 Frankenthal (DE)
(86) Internationale Anmeldenummer: PCT/EP2023/078316
(87) Internationale Veröffentlichungsnummer: WO 2024/088771

(56) Entgegenhaltungen:
- US-A1- 2013 054 863
- US-A1- 2017 270 261
- US-A1- 2020 146 520

## Beschreibung

Die Erfindung betrifft ein Verfahren zur drahtlosen Registrierung einer Pumpe mit einer Pumpensteuerung bei einer zentralen Verwaltungseinheit unter Verwendung einer mobilen Kommunikationsvorrichtung.

Pumpen werden sowohl industriell als auch in Privathaushalten eingesetzt, so bspw. in Heizungs- und Brauchwasseranlagen. Zur Optimierung des Serviceangebotes haben die Pumpenhersteller ein Interesse daran, dass die ausgelieferten und in Betrieb genommenen Pumpen registriert werden. Dadurch lassen sich die Pumpen im Betrieb besser überwachen und bei Bedarf kann der Hersteller kundenspezifische Service- und Wartungsdienstleistungen anbieten.

Bislang erfolgt die Registrierung des Kunden über die Website des Pumpenherstellers. Eine Registrierungsaufforderung oder -bitte erhält der Kunde in der Betriebsanleitung der ausgelieferten Pumpe oder durch sonstige, an der Pumpe bzw. der Verpackung der Pumpe angebrachte Hinweise. In der Praxis ist die Quote erfolgreicher Registrierungen jedoch ausbaufähig, da der damit verbundene Aufwand den Kunden offensichtlich noch davon abhält. Es ist daher wünschenswert, ein verbessertes Verfahren aufzuzeigen, das den Kunden besser an die Registrierung erinnert bzw. den gesamten Registrierungsprozess einfacher gestaltet.

Die US 2013/054863 A1 beschreibt eine Ressourcenverwaltungsplattform mit einer Schnittstelle, die so konfiguriert ist, dass sie Medienverwaltungsinformationen und Energiemanagementinformationen übermittelt, einem Prozessor, der so konfiguriert ist, dass er eine eingehende Kommunikation erkennt, um einen Betriebszustand als Reaktion auf den Empfang der Medienverwaltungsinformationen oder der Energiemanagementinformationen zu ändern, wobei der Prozessor ferner so konfiguriert ist, dass er als Reaktion auf das Erkennen von Medienverwaltungsinformationen eine Ausgabe von Medieninhalten initiiert, als Reaktion auf das Erkennen der Energiemanagementinformationen eine Änderung eines Betriebszustands einer Ressource initiiert und mindestens einen Teil der Medieninhalte und der Energiemanagementinformationen in einem Speicher speichert.

Gelöst wird diese Aufgabe durch ein Verfahren gemäß den Merkmalen der unabhängigen Ansprüche 1, 13 und 14.

Vorteilhafte Ausführungen des Verfahrens sind Gegenstand der abhängigen Ansprüche.

Erfindungsgemäß wird vorgeschlagen, dass ein Signalgenerator der Pumpensteuerung eine Art Broadcast-Signal aussendet, sofern die Pumpe noch nicht bei einer zentralen Verwaltungseinheit registriert worden ist. Eine mobile Kommunikationsvorrichtung, die sich in einem aktivierten Überwachungsmodus befindet, kann das Broadcast-Signal automatisch empfangen und eine Identifikationsinformation zur eindeutigen Identifikation der Pumpe an die zentrale Verwaltungseinheit übertragen.

Bei der mobilen Kommunikationsvorrichtung kann es sich beispielsweise um ein handelsübliches Smartphone, ein Tablet oder einen Laptop mit installierter dedizierter Applikation handeln. Die Kommunikationsvorrichtung kann alternativ auch ein spezielles Servicegerät des Pumpenherstellers sein. Gelangt der Kunde oder ein Servicetechniker mit der Kommunikationsvorrichtung und der darauf installierten und ausgeführten Applikation in den Empfangsbereich um die Pumpe, so kann die Kommunikationsvorrichtung das von der Pumpe ausgesendete Broadcast-Signal empfangen und automatisch eine nicht registrierte Pumpe erkennen. Die Kommunikationsvorrichtung kann dann im Anschluss automatisiert oder nach erfolgter Benutzereingabe eine Identifikationsinformation zur Identifikation der Pumpe an eine zentrale Verwaltungseinheit übertragen.

Vorstellbar ist es beispielsweise, dass das Broadcast-Signal dauerhaft durch die Pumpensteuerung ausgesendet wird, sofern sich die Pumpe selbst als "nicht registriert" erachtet. In diesem Zusammenhang ist es sinnvoll, wenn die Übertragungstechnologie bzw. die gewählte Signalart des Broadcast-Signals von Personen als nicht störend empfunden wird. Auch sollten mögliche Interferenzen mit umstehenden elektronischen Geräten möglichst vermieden werden.

Das Broadcast-Signal kann für Menschen ohne technische Hilfsmittel nicht erkennbar sein. Vorstellbar ist ebenso die Verwendung einer Signalart, die durch den Menschen zwar wahrnehmbar ist, dies jedoch nur im tolerierbaren Umfang, so dass das Broadcast-Signal von der Person nicht als dauerhaft störend empfunden wird. Dies hat den Vorteil, dass der Nutzer auch ohne Kommunikationsvorrichtung an die Registrierung erinnert wird, wenn er in die Nähe der Pumpe gelangt.

Vorstellbar ist es ebenso, dass das Broadcast-Signal nur für eine definierte Zeitspanne ausgesendet wird und bei ausbleibender Registrierung nach einem definierten Übertragungszeitraum eine Deaktivierung des Broadcast-Signals erfolgt. Denkbar ist es auch, das Broadcast-Signal periodisch wiederholend auszusenden.

Die vorgenannte Identifikationsinformation kann vorteilhafterweise bereits im Broadcast-Signal enthalten sein, d.h. die Information muss nicht von der Kommunikationsvorrichtung erzeugt werden, sondern stammt stattdessen originär von der Pumpe selbst. Die Identifikationsinformation kann die mobile Kommunikationsvorrichtung nach Empfang und Auswertung des Broadcast-Signals an die zentrale Verwaltungseinheit übermitteln.

Bei der zentralen Verwaltungseinheit kann es sich um ein zentrales Serversystem des Pumpenherstellers bzw. eines Drittunternehmens handeln. Vorstellbar ist auch eine cloudbasierte Lösung. Die zentrale Verwaltungseinheit dient insbesondere zur Verwaltung und Identifizierung der ausgelieferten Pumpen und zur optionalen Zuordnung der identifizierten Pumpen zu Kundendaten. Basierend auf diesen Informationen kann der Hersteller gezielt Serviceinformationen bzw. Servicedienstleistungen anbieten. Denkbar ist es auch, dass eine solche Verwaltungseinheit als Flotten-Management-Tool eingesetzt wird, d.h. eine zentrale Überwachung der im Feld laufenden und registrierten Pumpen erfolgt. Zu diesem Zweck ist es wünschenswert, dass die Pumpe weitere Betriebsdaten während der Laufzeit überträgt.

Allgemein hat die Verwendung eines Broadcast-Signals den Vorteil, dass zwischen mobiler Kommunikationsvorrichtung und Pumpe kein Aufbau eines Kommunikationskanals notwendig ist. Der Nutzer muss lediglich die Kommunikationsvorrichtung für den Empfang des Broadcast-Signals aktivieren, insbesondere durch Starten einer dedizierten Applikation, die die Kommunikationsvorrichtung in den Empfangsmodus versetzt. Sofern die gewählte Übertragungstechnologie keinen direkten Sichtkontakt zwischen Pumpe und Kommunikationsvorrichtung verlangt, spielt das Verfahren seine Vorteile insbesondere bei schwer zugänglichen Pumpen aus, die bspw. versteckt und/oder gar innerhalb anderweitiger Geräte und Systeme verbaut sind. Ein weiterer Vorteil des Verfahrens kommt dann zum Tragen, wenn am Installationsort eine Vielzahl von Pumpen verbaut ist, deren Erkennung dann automatisiert durch die Kommunikationsvorrichtung erfolgen kann.

Generell ist die Übertragungstechnologie für das Broadcast-Signal beliebig wählbar, von Vorteil ist jedoch eine Funkübertragungstechnologie, die insbesondere keinen direkten Sichtkontakt erfordert, was aufgrund der oftmals schlecht zugänglichen Installationslage von Vorteil ist. Erfindungsgemäß fällt die Wahl auf ein akustisches Signal für die Übertragung des Broadcast-Signals. In diesem Fall kann das ohnehin verbaute Mikrofon einer Kommunikationsvorrichtung, wie beispielsweise eines konventionellen Smartphones oder Tablets, für den Empfang des akustischen Signals genutzt werden. Das akustische Signal kann in Frequenzbereichen liegen, die durch den Menschen nicht wahrnehmbar sind. Denkbar ist jedoch auch, hörbare Frequenzbereiche zu nutzen, sofern das generierte akustische Signal für den Menschen nicht als störend empfunden wird.

Erfindungsgemäß wird das akustische Broadcast-Signal durch eine bestehende Komponente der Pumpensteuerung erzeugt, d.h. es muss kein gesondertes Kommunikationsmodul installiert werden, sondern es kann stattdessen eine bestehende Komponente für die Aussendung des Broadcast-Signals genutzt werden. Erfindungsgemäß kann die Motorsteuerung, erfindungsgemäß ein verbauter Frequenzumrichter, zur Generierung des akustischen Signals verwendet werden. Regulären Betriebsgeräuschen der Pumpe kann eine Zusatzinformation aufmoduliert werden, die durch passende Signalauswertung der Kommunikationsvorrichtung erkannt wird.

Gemäß vorteilhafter Ausführung kann bspw. die erzeugte Ausgangsspannung des Frequenzumrichters, d.h. die Motorspeisespannung, verändert werden, wodurch ein erfassbares akustisches Signal generiert wird. Zum regulären Betrieb des Pumpenmotors wird die Motorspannung mit variabler Grundfrequenz und Amplitude am Ausgang des Frequenzumrichters erzeugt. Bevorzugt kann dieser Spannung bspw. ein Spannungsverlauf mit höherer Frequenz als der Grundfrequenz eingeprägt werden, d.h. eine sogenannte Hochspannungsinjektion durch geeignete Ansteuerung des Frequenzumrichters vorgenommen werden. Durch geeignete Einprägung eines hochfrequenten Spannungsverlaufs auf die grundfrequente Motorspannung lässt sich ein definierbares akustisches Signal während des laufenden Pumpenbetriebs erzeugen, das durch die Kommunikationsvorrichtung detektierbar ist. Diese zusätzliche Frequenzmodulation der Motorspannung beeinflusst den regulären Pumpenbetrieb nicht oder nur marginal, so dass die Pumpe weiterhin ordnungsgemäß funktioniert.

Anstatt der Möglichkeit zur Hochfrequenzinjektion wird in vorteilhafter Ausführung der Erfindung vorgeschlagen, die Schaltfrequenz, mit der die integralen Schaltelemente des Inverterbausteins des Frequenzumrichters geschaltet werden, zu modifizieren. Die Anpassung der Schaltfrequenz hat in der Regel keinen Einfluss auf die erzeugte Ausgangspannung, führt jedoch zu einem abweichenden akustischen Betriebsgeräusch der Pumpe.

Vorstellbar ist beispielsweise, dass die Schaltelemente originär mit einer üblicherweise konstanten Referenzschaltfrequenz geschaltet werden. Steht eine Informationsübermittlung von der Pumpe an die Kommunikationsvorrichtung an, so wird die Schaltfrequenz bevorzugt um einen definierten Betrag erhöht oder reduziert. Diese Abweichung der aktuellen Schaltfrequenz von einer originären Referenzschaltfrequenz kann akustisch erfasst und dadurch von der Kommunikationsvorrichtung erkannt werden. Beispielsweise könnte bei einer originären Referenzschaltfrequenz von 16kHz durch eine Verringerung der Schaltfrequenz auf 15kHz die Pumpe gegenüber der Kommunikationsvorrichtung als unregistriert signalisiert werden.

Die definierte Änderung der Schaltfrequenz kann gemäß einer bevorzugten Erweiterung der Erfindung auch dazu genutzt werden, eine binäre Datenfolge von der Pumpe an die Kommunikationsvorrichtung zu übermitteln. Zu diesem Zweck muss die Änderung der Schaltfrequenz zeitlich getaktet werden, d.h. die Änderung der Schaltfrequenz muss zu definierten Zeitpunkten erfolgen. Ist die Kommunikationsvorrichtung mit der zeitlichen Änderungsrate synchronisiert, lässt sich eine binäre Datenfolge von der Pumpe an die Kommunikationsvorrichtung übermitteln.

Anstelle eines akustischen Signals kann auch ein Ultraschallsignal für die Übertragung des Broadcast-Signals verwendet werden.

Die zentrale Verwaltungseinheit kann nach Empfang der Identifikationsinformationen von der mobilen Kommunikationsvorrichtung eine Registrierungsinformation generieren und diese zurück an die mobile Kommunikationsvorrichtung übertragen. Letztere kann dann eingerichtet sein, die empfangene Registrierungsinformation an die Pumpensteuerung bzw. die Pumpe weiterzuleiten. In diesem Fall kann nach Empfang der Registrierungsinformation der Registrierungsprozess erfolgreich abgeschlossen sein und die Pumpe gilt als registriert. Die Pumpe stoppt auch die Aussendung des Broadcast-Signals.

Für die Übermittlung der Registrierungsinformation an die Pumpensteuerung kann beispielsweise dieselbe Übertragungstechnologie genutzt werden, wie diejenige zur Übermittlung des Broadcast-Signals. Denkbar und vorteilhaft ist es jedoch, stattdessen einen gesonderten Kommunikationskanal mit abweichender Übertragungstechnologie zwischen Pumpe und Kommunikationsvorrichtung aufzubauen. Denkbar ist hier der Rückgriff auf bekannte Übertragungsstandards wie Bluetooth, insbesondere Low-Power-Bluetooth. Auf diesem Weg können weitergehende Informationen zwischen Pumpe und Kommunikationsvorrichtung ausgetauscht werden, so beispielsweise Informationen über den Pumpenzustand, die eine externe Überwachung und gegebenenfalls Diagnose durch die Verwaltungseinheit zulassen.

Der Aufbau eines separaten Übertragungskanals kann beispielsweise manuell durch den Benutzer der Kommunikationsvorrichtung bzw. der Pumpe getriggert werden. Vorstellbar ist es ebenso, dass der Aufbau des Kommunikationskanals selbsttätig durch die auf der Kommunikationsvorrichtung ausgeführte Applikation initiiert wird, insbesondere nach Empfang der Registrierungsinformation von der Verwaltungseinheit. Eine so aufgebaute Verbindung zwischen Pumpe und Kommunikationsvorrichtung kann dann für die Übertragung der empfangenen Registrierungsinformation an die Pumpensteuerung genutzt werden.

Besonders vorteilhaft ist es, wenn die Pumpe nach Empfang der Registrierungsinformation die Aussendung des Broadcast-Signals entweder vollständig stoppt oder alternativ das ausgesendete Broadcast-Signal modifiziert. Durch die Modifikation des Broadcast-Signals könnte dann eine Folgeinformation ausgesendet werden, beispielsweise zur Indikation der erfolgreich durchgeführten Registrierung. Die Kommunikationsvorrichtung kann so durch Auswertung der Broadcast-Signale alle registrierten Pumpen im Empfangsbereich von nicht registrierten Pumpen unterscheiden.

Das Broadcast-Signal der Pumpe kann jedoch nicht nur zur Anzeige des Registrierungszustands und zur Identifikation der Pumpe genutzt werden, sondern innerhalb des Broadcast-Signals können weitergehende Informationen versteckt sein. Denkbar ist es beispielsweise auch, eine Art Zustandsindikator innerhalb des Broadcast-Signals zu übermitteln, der zur Anzeige der Funktionsfähigkeit bzw. einer Anomalie der Pumpe eingesetzt werden kann. Anhand des empfangenen Broadcast-Signals kann die Kommunikationsvorrichtung dann funktionsfähige Pumpen von Pumpen mit auftretenden Anomalien unterscheiden.

So ist es beispielsweise vorstellbar, dass die Kommunikationsvorrichtung nach Empfang eines Broadcast-Signals, das eine Anomalie der Pumpe identifiziert, weitergehende Informationen von der Pumpensteuerung über die Übertragungstechnologie des Broadcast-Signals oder den separaten Kommunikationskanal abfragt, um diese zusätzlichen Diagnoseinformationen sodann an die zentrale Verwaltungseinheit weiterreichen zu können.

Für den Registrierungsprozess kann es wünschenswert sein, dass die auf der Kommunikationsvorrichtung ausgeführte Applikation nach Erhalt der Identifikationsinformation zunächst eine Benutzerabfrage generiert, bevor der Registrierungsprozess fortgeführt oder gar abgeschlossen wird. Durch eine solche Abfrage kann der Nutzer der Kommunikationsvorrichtung zur Eingabe von kundenspezifischen Daten aufgefordert werden. Nach erfolgter Eingabe leitet die Applikation die Daten dann, insbesondere zusammen mit der Identifikationsinformation, an die zentrale Verwaltungseinheit weiter.

Neben dem erfindungsgemäßen Verfahren betrifft die vorliegende Erfindung ein System umfassend wenigstens eine Pumpe, wenigstens eine mobile Kommunikationsvorrichtung sowie wenigstens eine zentrale Verwaltungseinheit. Das System ist erfindungsgemäß derart konfiguriert, so dass die Schritte gemäß dem erfindungsgemäßen Verfahren ausgeführt werden. Insbesondere sieht die Pumpe des Systems einen Signalgenerator bzw. eine angepasste Motorsteuerung vor, um die Generierung und Aussendung eines geeigneten Broadcast-Signals für die Übertragung von Identifizierungsinformationen sowie möglichen Zustandsinformationen zu ermöglichen. Die verwendete Kommunikationsvorrichtung ist dabei geeignet, ein solches Broadcast-Signal zu empfangen und auszuwerten. Ferner kann vorgesehen sein, dass zwischen Kommunikationsvorrichtung und Pumpensteuerung ein separater Kommunikationskanal für den Austausch von Diagnoseinformationen aufgebaut werden kann. Ferner kann die Kommunikationsvorrichtung über einen weiteren Übertragungsstandard mit einer zentralen Verwaltungseinheit kommunizieren.

Neben dem erfindungsgemäßen System betrifft die vorliegende Erfindung ebenso eine Pumpe, bevorzugt eine Kreiselpumpe, besonders bevorzugt eine Heizungsumwälzpumpe, mit einer Pumpensteuerung, die konfiguriert ist zur Durchführung des erfindungsgemäßen Verfahrens. Zuletzt betrifft die Erfindung auch ein Computerprogramm, umfassend Befehle, die bei der Ausführung des Programms durch eine mobile Kommunikationsvorrichtung dieses veranlassen, das Verfahren bzw. die Schritte des Verfahrens gemäß der vorliegenden Erfindung auszuführen. Insbesondere versetzt das Computerprogramm die Kommunikationsvorrichtung in einen Überwachungszustand zum Empfang und Auswerten des Broadcast-Signals unter Verwendung des integrierten Empfangsmoduls, insbesondere des integralen Mikrofons des Gerätes.

Weitere Vorteile und Eigenschaften der Erfindung sollen nachfolgend anhand der in den Figuren ausgeführten Anwendungsschritte näher erläutert werden. Es zeigen:
- Fig. 1:: eine schematische Skizzierung der Verfahrensschritte gemäß eines ersten Anwendungsszenarios und
- Fig. 2:: eine Skizzierung der schematischen Schritte während eines zweiten Anwendungsszenarios.

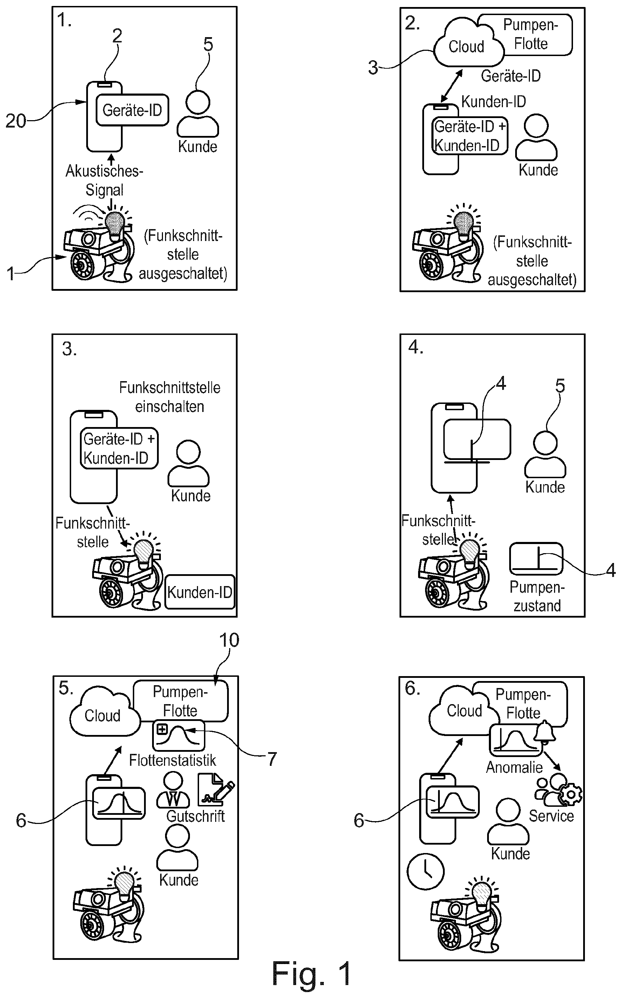

Fig. 1 skizziert schematisch die Verfahrensschritte der Erfindung. Bei der hier dargestellten Pumpe 1 handelt es sich um eine Heizungsumwälzpumpe, die in der Heizungsanlage des Kunden 5 verbaut ist. Die Heizungsumwälzpumpe 1 umfasst einen Elektromotor, der mittels integriertem Frequenzumrichter energieeffizient geregelt wird. Gemäß dem erfindungsgemäßen Verfahren wird durch den Frequenzumrichter der Pumpe 1 ein akustisches Signal 20 zur Signalisierung einer Statusinformation generiert. Die Statusinformation, nachfolgend als "akustische rote oder grüne Lampe" bezeichnet, zeigt an, ob die Pumpe 1 beim Pumpenhersteller 3 registriert wurde oder nicht. Die einzelnen Schritte des Registrierungsprozesses sind in den 6 Abbildungen der Fig. 1 chronologisch dargestellt.

### Schritt 1:

Im Auslieferungszustand der Pumpe 1 sendet diese ein akustisches Signal 20 ("akustische rote Lampe") aus, welches über das Mikrophon eines Smartphones 2 erkannt werden kann und welches eine DevicelD der Pumpe 1 beinhaltet. Die Erzeugung des akustischen Signals 20 erfolgt mittels des erfindungsgemäßen Verfahrens durch Variation eines Betriebsparameters des verbauten Frequenzumrichters der Pumpe 1.

Neben dem zum Betrieb des Motors benötigten Spannungsverlaufs in einer Grundfrequenz, besteht hier die Möglichkeit mittels einer sogenannten HochfrequenzInjektion einen zusätzlichen hochfrequenten Spannungsverlauf durch den Frequenzumrichter erzeugen zu lassen. Dieser hochfrequente Spannungsverlauf lässt sich derart einprägen, so dass ein akustisches Signal 20 entsteht, welches durch das Smartphone 2 und die dort installierte Applikation erfasst und ausgewertet werden kann. Insbesondere führt die Applikation eine Echtzeit FFT-Analyse des zuvor über das Mikrophon des Smartphones aufgezeichneten Signals durch.

Alternativ dazu könnte ein akustisch erfassbares oder wahrnehmbares Signal 20 durch die Variation der Schaltfrequenz des Frequenzumrichters erzeugt werden, so dass die Abweichung zu einer festgelegten Referenzfrequenz zur Übertragung von Informationen genutzt werden kann. Bei einer Referenzschaltfrequenz von 16kHz könnte beispielsweise eine Schaltfrequenz von 15kHz signalisieren, dass die Pumpe 1 nicht registriert ist ("akustische rote Lampe"). Die Grundfrequenz für den eigentlichen Betrieb des Motors liegt dabei üblicherweise im Bereich 50Hz bis 300Hz und wird durch die Variation der Schaltfrequenz nicht beeinflusst. Legt man für die Variation zwischen zwei oder sogar mehr Schaltfrequenzen ein festes Zeitfenster fest, so besteht die Möglichkeit rudimentäre digitale Informationen wie die DevicelD in Form von binären '1' und '0' als "Broadcast" zu senden.

Bei Ausführung einer entsprechenden Applikation auf dem Smartphone 2 kann das akustische Signal 20 ausgewertet und die Pumpe 1 als noch nicht registrierte Pumpe identifiziert werden. Ferner kann das akustische Signal 20 bereits die DevicelD der Pumpe 1 beinhalten, die das Smartphone 2 empfängt und im weiteren Prozess verwenden kann.

### Schritt 2:

Nach Empfang der DevicelD der Pumpe 1 durch das Smartphone 2 wird der Anwender 5 über die App des Smartphones 2 zu einer Online-Registrierung der Pumpe 1 geleitet. Die Verbindung zwischen Smartphone 2 und Cloud 3 kann dabei zumindest teilweise per Mobilfunkstandard, bspw. LTE, oder WLAN erfolgen. Die DevicelD wird an einen Cloud-Dienst 3 des Pumpenherstellers übertragen und dort mit einer CustomerID in Verbindung gebracht.

### Schritt 3

Nach Bereitstellung und Verknüpfung der CustomerID mit der DevicelD wird die CustomerID im Nachgang über eine optionale zusätzliche digitale Kommunikationsverbindung zwischen Smartphone 2 und Pumpe 1 gemäß dem Bluetooth/Bluetooth Low Energy Standard auf die Pumpe 1 gespielt. Das erzeugte akustische Signal 20 der Pumpe 1 ändert sich zur "akustischen grünen Lampe", bspw. indem die Variation des Betriebsparameters rückgängig gemacht wird. Die Übertragung der CustomerID an die Pumpe 1 ist jedoch nur optional, alternativ könnte der Pumpe 1 auch durch eine manuelle Eingabe am Bedienfeld der Pumpe angezeigt werden, dass die Registrierung erfolgreich war.

### Schritt 4:

Die registrierte Pumpe 1 sendet eine Kennung ihres Gesundheitswertes 4 an die App des Smartphones 2, entweder ebenfalls über das akustische Signal 20 oder aber bevorzugt über die aufgebaute Bluetooth-Verbindung.

### Schritt 5:

Dieser Gesundheitswert 4 wird von dem Smartphone 2 zur Cloud 3 gesendet. In der Cloud 3 wird ein Vergleich des überlieferten Gesundheitswertes 4 der Pumpe 1 mit den Gesundheitswerten 7 einer anonymen Flotte 10 vergleichbarer Pumpenmodelle angestellt. Der Kunde 5 erhält anschliessend eine Bewertung 6 seiner eigenen Pumpe 1 im Vergleich zur anonymen Flotte 10.

### Schritt 6:

Im Fall einer Störung oder dem Auftreten einer Anomalie wird das akustische Signal 20 wieder genutzt, um den Kunden 5 auf die Anomalie der Pumpe 1 aufmerksam zu machen. Die akustische "grüne Lampe blinkt" und signalisiert so eine Anomalie. Der Service 11 kann nun aktiv auf den Kunden 5 mit bekannter CustomerID zugehen und Service für die Pumpe 1 anbieten.

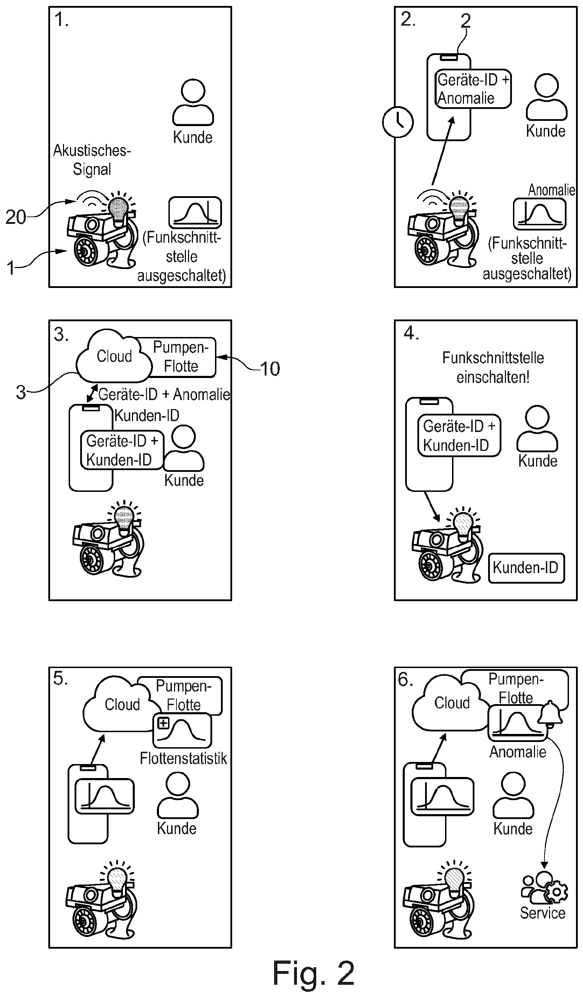

Fig. 2 zeigt ein modifiziertes Anwendungsszenario für das erfindungsgemäße Verfahren. Im Unterschied zum ersten Szenario gemäß Fig. 1 tritt beim Use-Case gemäß Fig. 2 bereits eine Störung bei einer noch nicht registrierten Pumpe auf ("rote Lampe"). Die Pumpe 1 ist hier in der Lage, die Anomalie auch ohne Anbindung an die Cloud 3 selbsttätig zu erkennen. Nach Detektion der Anomalie durch die Pumpe 1 wird das akustische Signal genutzt, um den Kunden auf die Pumpe 1 aufmerksam zu machen. Sofern das akustische Signal durch das Smartphone 2 erkannt wird, soll auch hier der Registrierungsprozess ausgeführt werden, um die eindeutige DevicelD der Pumpe 1 mit einer CustomerID zu verknüpfen und dadurch kundenspezifischen Service anbieten zu können.

## Patentansprüche

1. Verfahren zur drahtlosen Registrierung einer Pumpe (1) mit einer Pumpensteuerung bei einer zentralen Verwaltungseinheit (3) unter Verwendung einer mobilen Kommunikationsvorrichtung (2),
**dadurch gekennzeichnet,**
**dass** ein Signalgenerator der Pumpensteuerung ein Broadcastsignal (20) aussendet, sofern die Pumpe (1) noch nicht bei der zentralen Verwaltungseinheit (3) registriert ist, und die mobile Kommunikationseinrichtung (2) in einem aktivierten Überwachungsmodus das Broadcastsignal (20) empfängt und eine Identifikationsinformation zur Identifizierung der Pumpe (1) an die zentrale Verwaltungseinheit (3) überträgt, wobei es sich bei dem Broadcastsignal (20) um ein akustisches Signal handelt, das durch einen verbauten Frequenzumrichter der Motorsteuerung durch modifizierte Ansteuerung des Pumpenantriebs erzeugt wird.

2. Verfahren nach Anspruch 1, **dadurch gekennzeichnet, dass** die Pumpensteuerung das Broadcastsignal (20) dauerhaft aussendet, sofern die Pumpe (1) noch nicht registriert wurde.

3. Verfahren nach einem der vorstehenden Ansprüche, **dadurch gekennzeichnet, dass** das Broadcastsignal (20) wenigstens eine Information zur eindeutigen Identifikation der Pumpe (1) enthält und die mobile Kommunikationsvorrichtung (2) nach Empfang des Broadcastsignals (20) diese Information an die zentrale Verwaltungseinheit (3) übermittelt.

4. Verfahren nach einem der vorstehenden Ansprüche 1 bis 3, **dadurch gekennzeichnet, dass** es sich bei dem akustischen Signal um ein reguläres Betriebsgeräusch der Pumpe handelt, dem durch die Motorsteuerung eine Information aufmoduliert wurde.

5. Verfahren nach einem der vorstehenden Ansprüche, **dadurch gekennzeichnet, dass** die zentrale Verwaltungseinheit (3) nach Empfang der Identifikationsinformation eine Registrierungsinformation an die mobile Kommunikationsvorrichtung (2) zur Weiterleitung an die Pumpensteuerung überträgt.

6. Verfahren nach Anspruch 5, **dadurch gekennzeichnet, dass** die Kommunikationsvorrichtung (2) die Registrierungsinformation an die Pumpensteuerung mittels der für das Broadcastsignal (20) genutzten Übertragungstechnologie weiterleitet oder alternativ einen separaten Übertragungskanal mit abweichender Übertragungstechnologie aufbaut und die Registrierungsinformation über diesen separaten Kanal an die Pumpensteuerung überträgt.

7. Verfahren nach Anspruch 6, **dadurch gekennzeichnet, dass** der separate Übertragungskanal ein bidirektionaler Funkkanal für den bidirektionalen Informationsaustausch zwischen Kommunikationsvorrichtung (2) und Pumpensteuerung ist, insbesondere gemäß dem Bluetooth-Standard.

8. Verfahren nach einem der vorstehenden Ansprüche, **dadurch gekennzeichnet, dass** die Pumpensteuerung nach erfolgreicher Registrierung, insbesondere nach Empfang der Registrierungsinformation, die Aussendung des Broadcastsignals (20) deaktiviert oder das Broadcastsignal (20) modifiziert, wobei das modifizierte Broadcastsignal (20) insbesondere eine Information enthält, die die Pumpe (1) als registriert kennzeichnet.

9. Verfahren nach einem der vorstehenden Ansprüche, **dadurch gekennzeichnet, dass** das Broadcastsignal (20) und/oder das modifizierte Broadcastsignal (20) eine Information zur Signalisierung des Funktionszustands der Pumpe (1) enthält.

10. Verfahren nach einem der vorstehenden Ansprüche, **dadurch gekennzeichnet, dass** die mobile Kommunikationsvorrichtung (2) ein Smartphone, Tablet oder ein mobiler Computer ist und eine dedizierte Applikation einen Überwachungsmodus der Vorrichtung ausführt.

11. Verfahren nach Anspruch 10, **dadurch gekennzeichnet, dass** die Applikation über das verbaute Mikrophon der Vorrichtung Audiosequenzen analysiert, um aus einem empfangenen Broadcastsignal (20) eine Identifikations- und/oder Zustandsinformation zu identifizieren.

12. Verfahren nach einem der Ansprüche 10 oder 11, **dadurch gekennzeichnet, dass** die Applikation nach Identifizierung der Identifikationsinformation eine Abfrage nach Kundendaten generiert und die durch den Benutzer (5) eingegebenen Kundendaten an die zentrale Verwaltungseinheit (3) überträgt.

13. Pumpe (1), insbesondere Kreiselpumpe, besonders bevorzugt Heizungsumwälzpumpe, mit einer Pumpensteuerung konfiguriert zur Durchführung des Verfahrens gemäß einem der vorstehenden Ansprüche, insbesondere zur Generierung und Aussendung des Broadcastsignals (20).

14. Computerprogramm, umfassend Befehle, die bei der Ausführung des Programms durch eine mobile Kommunikationsvorrichtung dieses veranlassen, das Verfahren/die Schritte des Verfahrens nach einem der vorstehenden Ansprüche 1 bis 12 auszuführen, insbesondere die Kommunikationsvorrichtung in einen Überwachungszustand zum Empfang und Auswerten eines Broadcastsignals (20) versetzen.

## Claims

1. Method for wirelessly registering a pump (1) having a pump controller with a central administration unit (3) using a mobile communication device (2),
**characterized**
**in that** a signal generator of the pump controller emits a broadcast signal (20) if the pump (1) is not yet registered with the central administration unit (3), and the mobile communication equipment (2) receives the broadcast signal (20) in an activated monitoring mode and transmits identification information for identifying the pump (1) to the central administration unit (3), wherein the broadcast signal (20) is an acoustic signal, which is generated by a built-in frequency converter of the motor controller by modified actuation of the pump drive.

2. Method according to Claim 1, **characterized in that** the pump controller emits the broadcast signal (20) continuously if the pump (1) has not yet been registered.

3. Method according to either one of the preceding claims, **characterized in that** the broadcast signal (20) contains at least one information item for uniquely identifying the pump (1) and the mobile communication device (2) communicates said information to the central administration unit (3) after receiving the broadcast signal (20).

4. Method according to any one of the preceding Claims 1 to 3, **characterized in that** the acoustic signal is a normal operating noise of the pump, which has been modulated with information by the motor controller.

5. Method according to any one of the preceding claims, **characterized in that** the central administration unit (3), after receiving the identification information, transmits registration information to the mobile communication device (2) for forwarding to the pump controller.

6. Method according to Claim 5, **characterized in that** the communication device (2) forwards the registration information to the pump controller by means of the transmission technology used for the broadcast signal (20) or, alternatively, establishes a separate transmission channel with a different transmission technology and transmits the registration information to the pump controller via this separate channel.

7. Method according to Claim 6, **characterized in that** the separate transmission channel is a bidirectional radio channel for bidirectional information exchange between the communication device (2) and the pump controller, in particular in a manner compliant with the Bluetooth standard.

8. Method according to any one of the preceding claims, **characterized in that** the pump controller, after successful registration, in particular after receiving the registration information, deactivates the emission of the broadcast signal (20) or modifies the broadcast signal (20), wherein the modified broadcast signal (20) in particular contains information that identifies the pump (1) as registered.

9. Method according to any one of the preceding claims, **characterized in that** the broadcast signal (20) and/or the modified broadcast signal (20) contains information for signalling the functional status of the pump (1).

10. Method according to any one of the preceding claims, **characterized in that** the mobile communication device (2) is a smartphone, tablet or a mobile computer and a dedicated application implements a monitoring mode of the device.

11. Method according to Claim 10, **characterized in that** the application uses the built-in microphone of the device to analyse audio sequences in order to identify identification and/or status information from a received broadcast signal (20).

12. Method according to either one of Claims 10 and 11, **characterized in that** the application, after identifying the identification information, generates a request for customer data and transmits the customer data entered by the user (5) to the central administration unit (3).

13. Pump (1), in particular centrifugal pump, particularly preferably heating circulation pump, having a pump controller configured to carry out the method according to any one of the preceding claims, in particular for generating and emitting the broadcast signal (20).

14. Computer program comprising commands which, when the program is executed by a mobile communication device, cause said program to carry out the method/the steps of the method according to any one of the preceding Claims 1 to 12, in particular transfer the communication device into a monitoring state for receiving and evaluating a broadcast signal (20).

## Revendications

1. Procédé d'enregistrement sans fil d'une pompe (1) comprenant une commande de pompe auprès d'une unité de gestion centrale (3) en utilisant un dispositif de communication mobile (2),
**caractérisé en ce**
**qu'**un générateur de signaux de la commande de pompe émet un signal de diffusion (20) tant que la pompe (1) n'a pas encore été enregistrée auprès de l'unité de gestion centrale (3), et l'appareil de communication mobile (2) reçoit le signal de diffusion (20) dans un mode de surveillance activé et transmet des informations d'identification destinées à identifier la pompe (1) à l'unité de gestion centrale (3), le signal de diffusion (20) étant un signal sonore qui est généré par un variateur de fréquence installé du contrôleur de moteur par une commande modifiée de mécanisme d'entraînement de pompe.

2. Procédé selon la revendication 1, **caractérisé en ce que** la commande de pompe émet en permanence le signal de diffusion (20) tant que la pompe (1) n'a pas encore été enregistrée.

3. Procédé selon l'une des revendications précédentes, **caractérisé en ce que** le signal de diffusion (20) contient au moins une information destinée à l'identification unique de la pompe (1) et le dispositif de communication mobile (2) communique cette information à l'unité de gestion centrale (3) après la réception du signal de diffusion (20).

4. Procédé selon l'une des revendications précédentes 1 à 3, **caractérisé en ce que** le signal sonore est un bruit de fonctionnement régulier de la pompe auquel des informations ont été surmodulées par le contrôleur de moteur.

5. Procédé selon l'une des revendications précédentes, **caractérisé en ce que** l'unité de gestion centrale (3), après réception des informations d'identification, transmet des informations d'enregistrement au dispositif de communication mobile (2) en vue de leur retransmission à la commande de pompe.

6. Procédé selon la revendication 5, **caractérisé en ce que** le dispositif de communication (2) retransmet les informations d'enregistrement à la commande de pompe au moyen de la technologie de transmission utilisée pour le signal de diffusion (20) ou, en variante, établit un canal de transmission séparé avec une technologie de transmission différente et transmet les informations d'enregistrement à la commande de pompe par l'intermédiaire de ce canal séparé.

7. Procédé selon la revendication 6, **caractérisé en ce que** le canal de transmission séparé est un canal radio bidirectionnel pour l'échange bidirectionnel d'informations entre le dispositif de communication (2) et la commande de pompe, en particulier selon la norme Bluetooth.

8. Procédé selon l'une des revendications précédentes, **caractérisé en ce que** la commande de pompe, après un enregistrement réussi, en particulier après réception des informations d'enregistrement, désactive l'émission du signal de diffusion (20) ou modifie le signal de diffusion (20), le signal de diffusion (20) modifié contenant notamment des informations qui identifient la pompe (1) comme étant enregistrée.

9. Procédé selon l'une des revendications précédentes, **caractérisé en ce que** le signal de diffusion (20) et/ou le signal de diffusion (20) modifié contient des informations destinées à signaler l'état de fonctionnement de la pompe (1).

10. Procédé selon l'une des revendications précédentes, **caractérisé en ce que** le dispositif de communication mobile (2) est un smartphone, une tablette ou un ordinateur mobile et une application dédiée exécute un mode de surveillance du dispositif.

11. Procédé selon la revendication 10, **caractérisé en ce que** l'application analyse des séquences audio par l'intermédiaire du microphone installé du dispositif afin d'identifier des informations d'identification et/ou d'état à partir d'un signal de diffusion (20) reçu.

12. Procédé selon l'une des revendications 10 ou 11, **caractérisé en ce que** l'application, après l'identification des informations d'identification, génère une demande de données de client et transmet les données de client saisies par l'utilisateur (5) à l'unité de gestion centrale (3).

13. Pompe (1), en particulier pompe centrifuge, notamment de préférence pompe de circulation de chauffage, comprenant une commande de pompe configurée pour la mise en œuvre du procédé selon l'une des revendications précédentes, en particulier pour la génération et l'émission du signal de diffusion (20).

14. Programme informatique comprenant des instructions qui, lorsque le programme est exécuté par un dispositif de communication mobile, amènent celui-ci à exécuter le procédé/les étapes du procédé selon l'une des revendications 1 à 12 précédentes, en particulier à placer le dispositif de communication dans un état de surveillance en vue de la réception et de l'évaluation d'un signal de diffusion (20).
